**Europäisches Patentamt**

**European Patent Office**

**Office européen des brevets**

(19)

(11) Veröffentlichungsnummer : **0 500 580 B1**

(12) # EUROPÄISCHE PATENTSCHRIFT

(45) Veröffentlichungstag der Patentschrift :
**02.02.94 Patentblatt 94/05**

(51) Int. Cl.$^5$ : **G01N 31/22,** G01N 33/52, G01K 3/04

(21) Anmeldenummer : **90915757.0**

(22) Anmeldetag : **23.10.90**

(86) Internationale Anmeldenummer :
**PCT/EP90/01797**

(87) Internationale Veröffentlichungsnummer :
**WO 91/06853 16.05.91 Gazette 91/11**

(54) **INDIKATOR ZUR ANZEIGE VON ZEITABLÄUFEN UND/ODER DES ZEITPUNKTS DES EINTRITTS VON ZUSTANDSÄNDERUNGEN.**

(30) Priorität : **02.11.89 DE 3936542**

(43) Veröffentlichungstag der Anmeldung :
**02.09.92 Patentblatt 92/36**

(45) Bekanntmachung des Hinweises auf die
Patenterteilung :
**02.02.94 Patentblatt 94/05**

(84) Benannte Vertragsstaaten :
**AT BE CH DE DK ES FR GB GR IT LI LU NL SE**

(56) Entgegenhaltungen :
**GB-A- 1 323 833**
**US-A- 3 768 976**
**US-A- 4 154 107**
**Chemical Abstracts, volume 107, No. 13, 28 September 1987, (Columbus, Ohio, US), see page 538, abstract 114563u, & JP, 62105020**

(73) Patentinhaber : **BADISCHE TABAKMANUFACTUR ROTH-HANDLE GMBH Postach 11 40 D-77901 Lahr (DE)**

(72) Erfinder : **MÜLLER, Hubert Krummacker Str. 34 D-7833 Endingen (DE)**
Erfinder : **LANGENFELD, Bruno Tannenweg 26 D-7808 Waldkirch (DE)**

(74) Vertreter : **Hansmann, Axel et al Patent- und Rechtsanwälte Hansmann Vogeser Dr. Boecker Alber Dr. Strych Albert-Rosshaupter-Strasse 65 D-81369 München (DE)**

EP 0 500 580 B1

## Beschreibung

Die Erfindung betrifft einen Indikator gemäß dem Oberbegriff des Anspruchs 1.

Das Anwendungsgebiet der Erfindung liegt bei sogenannten Verfallsindikatoren, Reifegradanzeigern (bei Fermentationsprozessen), allgemeinen Zeitablaufsanzeigern und dergleichen, die an verderblichen oder sonstigen Zustandsänderungen unterworfenen Gegenständen anbringbar sind, um dem Verbraucher, Benutzer oder auch irgendwelchen Kontrollpersonen eine sichtbare Anzeige zu liefern, daß der Zeitpunkt eingetreten ist, zu dem sich an dem Gegenstand eine Zustandsänderung, und sei es der einfache Zeitablauf, ergeben hat oder zu erwarten ist.

Derartige Indikatoren sind in verschiedenen Formen bekannt geworden. Ein Indikator gemäß Oberbegriff des Hauptanspruches ist Gegenstand der älteren Patentanmeldung DE-A-39 07 683 der Anmelderin, gemäß welcher zwei unter sichtbarer Farbänderung miteinander reagierende chemische Verbindungen durch Mikroverkapselung zunächst an der Reaktion gehindert sind. Wird die durch die Mikrokapseln gebildete Barriere der Reaktionspartner dann durch Einwirken von mechanischem Druck zerstört, kann die Reaktion beginnen.

Es sind auch zahlreiche andere Indikatoren zur Anzeige von Zeitabläufen und/oder Zustandsänderungen bekanntgeworden, welche auf eine Lösung der vielfältigen Erfordernisse von Indikatoren für die genannten Zwecke abzielen.

Die DE-30 29 289 zeigt einen Alterungsindikator, der beispielsweise auf verderblichen Nahrungsmitteln anzubringen ist und aus mindestens einem verschlossenen Behälter besteht, der ein einziges Abteil aufweist und mindestens ein Fluid enthält, welches in der Lage ist, in Abhängigkeit von der Zeit und der Temperatur durch wenigstens einen Teil des Behälters nach außen zu wandern oder zu diffundieren, wobei die Alterung der dazugehörigen Ware durch Feststellung der aus diesem Behälter entwichenen Fluidmenge bewertet wird.

Die DE-PS 32 10 907 betrifft einen Indikator, bei dem die Zeit-/Temperatur-Belastung von Gegenständen nach der Eindringstrecke eines Fließmittels in einem Fließmedium erfaßt wird, wobei zur Steuerung der Eindringtiefe den in einem Depotkörper enthaltenen Feststoffen Gelbildner zugesetzt werden. Zwischen dem Depotkörper und dem Fließkörper befindet sich eine Sperre aus einem Folienstreifen, wobei zum Start jedoch dieser Folienstreifen herausgezogen werden muß.

Die DE-PS 37 17 025 zeigt eine Anzeigevorrichtung, bei der durch Anwendung von äußerem Druck eine in einer Depotkammer enthaltene Indikatormasse über einen Kanal mit einem Indikatorstreifen in Kontakt gebracht wird, wobei die Verfärbung des Indikatorstreifens beginnt und über den gesamten Streifen fortläuft und bei durchgehender Verfärbung das Ende des Zeitraums angezeigt wird. Zwischen Depot-Vorkammer und dem Anzeigekanal kann ein Steg ausgebildet sein, der das Eindringen der Indikatormasse in den Anzeigekanal im wesentlichen verhindert.

Ausgehend von dem eingangs erwähnten Stand der Technik liegt der vorliegenden Erfindung die Aufgabe zugrunde, einen alternativen Aufbau von Indikatoren der in Rede stehenden Gattung zur Verfügung zu stellen, dessen Wirkmechanismus auch unter Verwendung standardisierter handelsüblicher Ausgangsbestandteile des Indikators ein gut vorhersagbares gleichbleibendes Ablaufverhalten zeigt.

Das durch die vorliegende Erfindung erbrachte Lösungsprinzip der Aufgabe ist im Anspruch 1 gekennzeichnet. Die bei der vorliegenden Erfindung vorgesehene zusätzliche chemische Reaktion zwischen wenigstens einem der Indikator-Reaktionspartner und der Barriere ermöglicht je nach Anwendungsfall mit einfachen handelsüblichen Komponenten eine genaue vorherige Festlegung des Ablaufes des Indikationsvorganges und gestattet dabei im übrigen vielfältige Ausgestaltungen je nach Anwendungszweck und verfügbaren Materialien.

In den abhängigen Ansprüchen sind vorteilhafte Ausgestaltungen und Weiterbildungen gekennzeichnet.

Als besonders vorteilhaft hat sich dabei gemäß Anspruch 11 die Ausgestaltung der durchdringbaren Barriere als Metallfolie erwiesen, da solche Metallfolien mit genauen Qualitätsspezifikationen in zahlreichen Varianten standardisiert als handelsübliche Produkte erhältlich sind und somit ohne Sonderaufwand entsprechend den jeweiligen Anwendungsbedürfnisssen ausgewählt werden können.

Die vorliegende Erfindung zeichnet sich somit dadurch aus, daß sie den Aufbau von Indikatoren zur Anzeige von Zeitabläufen und/oder Zustandsänderungen unter Verwendung einfacher, handelsüblicher Bestandteile gestattet, dabei aber dennoch eine exakte Vorplanung der Anzeige unter Berücksichtigung der jeweiligen Einflußgrößen gestattet.

Ausführungsbeispiele und Einzelheiten der vorliegenden Erfindung werden nachfolgend unter Bezugnahme auf die Zeichnung beschrieben.

Fig. 1     zeigt ein Etikett mit einem daran angebrachten Verfallsindikator gemäß der vorliegenden Erfindung.

Fig. 2     zeigt schematisch den Schichtaufbau des Verfallsindikators gemäß Linie 2-2 der Fig. 1.

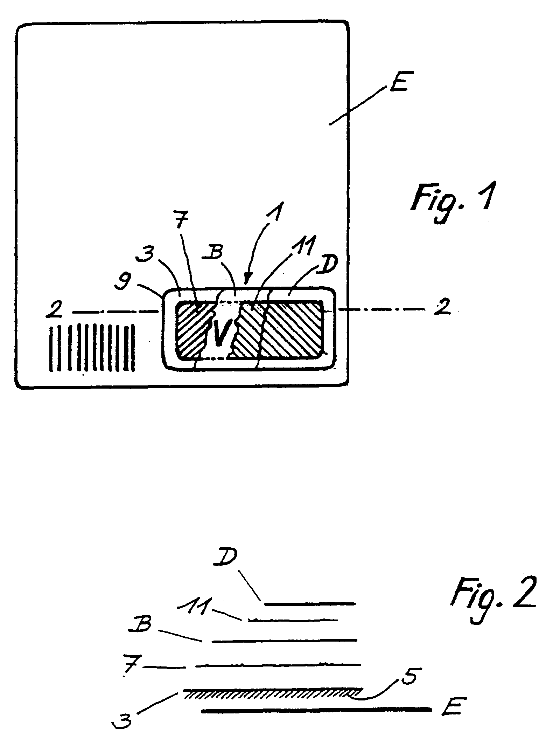

In Fig. 1 sieht man ein Etikett E, wie es auf Verpackungen, Flaschen und Gegenständen verschiedenster Art anbringbar ist, für die die Anzeige eines Zeitablaufes seit Herstellung, Ingebrauchnahme oder auch von Zustandsänderungen unter dem Einfluß von Temperatureinwirkungen, Stahlungseinwirkungen, Belichtung, Feuchtigkeitseinwirkung, Lufteinwirkung etc. etc. von Interesse ist.

Auf dem Etikett ist im unteren Bereich ein Indikator 1 angebracht, der in noch näher zu beschreibender Weise zur Anzeige der vorstehenden Abläufe und Zustandsänderungen dient.

Der Indikator besteht aus folgenden Bestandteilen: Einer Unterlage 3, die sich zur Anbringung an Gegenständen der in Rede stehenden Art (beispielsweise mittels unterer Klebeschicht 5) eignet oder die auch unmittelbar von dem Etikett E gebildet sein kann, wenn dessen Material mit den noch zu beschreibenden chemischen Bestandteilen des Indikators verträglich ist und dessen sichere Anbringung gestattet.

Auf die Unterlage 3 ist eine erste chemische Substanz 7 aufgebracht, die in noch näher zu beschreibender Weise an dem Indikationsvorgang mitwirkt. Dabei bleibt zwischen der chemischen Substanz 7 und dem Rand 9 der Unterlage ein Randstreifen frei, der die Befestigung einer Barriere B gestattet, welche die erstgenannte chemische Substanz 7 nach oben abschließt. Die Barriere B kann einen lesbaren Hinweis in Form von Buchstaben "V" oder dergleichen tragen, der in noch näher zu beschreibender Weise je nach der darüber befindlichen chemischen Substanz 11 erst nach dem überwachten Ablauf, Verfall oder dergleichen sichtbar wird.

Die auf der Oberseite der Barriere B angebrachte zweite chemische Substanz läßt auf der Barriere B ebenfalls einen Randstreifen frei, so daß sie von einer Abdeckfolie D eingeschlossen werden kann. Die Abdeckfolie D ist in noch näher zu beschreibender Weise aus einem Material, welches eine Beobachtung der bei Ablauf der chemischen Reaktion in dem Verfallsindikator auftretenden sichtbaren Veränderung gestattet.

Unterlage 3, Barriere B und Abdeckfolie D des Verfallsindikators bestehen im übrigen aus Materialien, welche eine dicht abschließende Verbindung dieser drei Bestandteile an dem Randstreifen miteinander gestatten, so daß die durch die Barriere B getrennten chemischen Substanzen 7 und 11 zunächst je für sich in dem Indikator eingeschlossen sind. Die Barriere B ist in noch näher zu beschreibender Weise eine Trenn- bzw. Deckschicht, die durch eine der von der Barriere zunächst eingeschlossenen chemischen Substanzen mit gezielten Lochfraß durchdringbar ist.

Während die Unterlage 3 und die Abdeckfolie D aus Materialien bestehen, welche von den eingeschlossenen Chemikalien 7 und 11 nicht zerstört werden können, besteht die Barriere B gemäß der vorliegenden Erfindung somit aus einem Material, welches mit wenigstens einer der chemischen Substanzen in solcher Weise reagiert, daß entweder die chemischen Substanzen selbst in Reaktion miteinander treten und die gewünschte Anzeige des Zeitablaufes, des Verfalls, des Reifegrades oder dergleichen bewirken können, oder bei einer vereinfachten Ausführungsform durch Lochfraß an der Barriere eine Veränderung des Indikators, beispielsweise Freilegung einer farbigen Unterlage sichtbar wird. Im letzteren Falle kann das in Fig. 2 gezeigte Ausführungsbeispiel durch Auslassung einer der chemischen Substanzen vereinfacht werden.

Dabei kann die mit der Barriere B reagierende chemische Substanz selbst auch mikroverkapselt oder makroverkapselt sein, so daß die Reaktion zwischen der chemischen Substanz und der Barriere erst nach Aufsprengung der Kapseln beginnt. Auf diese Weise kann auch der Indikator nach der vorliegenden Erfindung nach seiner Herstellung zunächst längere Zeit auf Lager gehalten werden, ohne daß die Indikatorreaktion abläuft, und es kann dann mittels einer Druckrolle zu dem gewünschten Zeitpunkt (Herstellungsdatum, Ingebrauchnahmedatum oder dergleichen) die Aufsprengung der Kapseln erfolgen und der Indikatorvorgang in Gang gesetzt werden. Wenn eine sehr spontane optische Anzeige nach erfolgtem Zeitablauf erfolgen soll, kann der Raum vor der Barriere ggfs. evakuiert werden bzw. hinter der Barriere mit leichtem (aus der Reaktion stammenden Überdruck "gearbeitet" werden.

Aufgrund des einfachen Aufbaus eignet sich ein Indikator nach der Erfindung zur Konfektionierung vom laufenden Band, wobei durch Vorstanzen bzw. Vorprägen der einzelnen Bestandteile bereits zwangsläufig eine Randversiegelung oder Randverriegelung herbeigeführt werden kann, so daß ein nicht gewolltes Unterwandern benachbarter Teile durch die verwendeten chemischen Substanzen verhindert wird und auch ein Schutz der enthaltenen ätzenden oder lösenden chemischen Substanzen gegen unbefugtes Manipulieren gegeben ist. Eine aufgebrachte Finish-Kaschierung kann weiter dazu beitragen.

Ein wesentliches Merkmal der vorliegenden Erfindung liegt darin, daß die durch die Barriere B getrennten chemischen Substanzen und durch die Unterlage 3 und Abdeckfolie D eingeschlossenen chemischen Substanzen mit der Barriere chemisch reagieren und in Reaktion miteinander erst nach Durchdringung der Barriere treten können.

Bei der chemischen Reaktion zwischen chemischer Substanz und Barriere B läßt sich insbesondere eine gezielte zeitabhängige Lochfraßkorrosion nutzen, die durch entsprechende Auswahl der eingesetzten chemischen Substanzen und des Materials der Barriere exakt steuerbar ist, so daß der Beginn der eigentlichen Indikatorreaktion zwischen den chemischen Substanzen ebenfalls genau steuerbar ist. Gestartet wird der Beginn der gezielten zeitabhängigen Lochfraßkorrosion entweder bereits bei der Zusammenstellung des Indikators oder durch mechanische oder photomechanische Einwirkung auf die mikro- oder makroverkapselten oder eingesiegelten chemischen Substanzen. Die Aufbringung der chemischen Substanzen auf die Unterlage 1 und die Barriere B kann durch Aufsprühung, Aufkaschierung oder dergleichen erfolgen.

Als Barriere B kommt im einfachsten Fall eine handelsübliche Aluminium-bedampfte Polymerfolie in Betracht. Geeignet sind auch Barrieren, die nach bekannten Verfahren aus der Siebdruckmasken-, Aufwalz- oder Laser-Photo-Ätztechnik hergestellt werden, wobei in ggf. vorgeätzten oder in anderer Weise verursachten "Sollbruchstellen" (Aussparungen) der Ätzvorgang abläuft.

Die letztgenannten, gut beherrschbaren Techniken werden vorwiegend dann eingesetzt, wenn der gewünschte Zeitablauf längs einer Zeitskala sichtbar verfolgt und beispielsweise der Endpunkt besonders markant hervorgehoben werden soll. Das läßt sich unter anderem durch abgestufte Barrierenstärke erreichen. Die Schichtdicke der Barriere kann auch beliebig festgelegt werden und in wirtschaftlicher Weise durch stromlose Abscheidung (Additionsverfahren) erzeugt werden.

Durchdringung der Barriere durch mindestens eine chemische Substanz 7 oder 11 kann durch Elimination, Permeation und/oder Penetration der Barriere durch (protrahierte) Abgabe solcher ätzenden bzw. lösenden Substanzen oder deren Gemischen erfolgen, die bei isothermer Anwendung reproduzierbar mit der Barriere bzw. einem entsprechenden Diaphragma in Wechselwirkung treten und dann nach Ablauf einer vorbestimmten Zeit eine sichtbare Veränderung herbeiführen. Diese sichtbare Zustandsänderung kann je nach Ausgestaltung der Barriere und/oder Deckschicht des Indikators in vorher verborgenen optischen Signalen (wie dem Buchstaben "V" in Fig. 1), einem Farbwechsel oder dergl. liegen. Es kann auch eine an sich bekannte Luminiszenz-Reaktion, Ausbildung eines dreidimensionalen Gebildes aus der Papierebene durch Gasentwicklung und dergleichen genutzt werden, und solche Effekte lassen sich auch in einfacher Weise optoelektronisch erfassen, wenn eine automatisierte Nutzung einer Verfallsanzeige oder eines sonstigen Ablaufes vorgesehen ist.

Als Ätz- bzw. Lösungssubstanzen lassen sich bekannte und kommerziel erhältliche Formulierungen aus der Galvano- bzw. Leiterplattentechnologie verwenden, die in hoher Reinheit erhältlich sind, und man kann sich dabei auch auf solche Stoffe beschränken, die wenig umweltbelastend sind (Gluconsäure und andere).

Als Retarder kommen einfache inerte Substanzen wie Talcum, $BaSO_4$, $MgO$, $MgCO_3$ aus der Pharmacokinetik und dergl. zum Einsatz. Zur Verkapselung/Einsiegelung der Ätz- bzw. Lösemittel lassen sich sowohl chemische als auch mechanisch-physikalische Verfahren einsetzen. bevorzugt werden hier Methoden der Sprühtrocknung, sowie die Beschichtung im Wirbelbett, wobei der feste, feinteilige Chemikalienkern von einem vertikalen Luftstrom in der Schwebe gehalten und mit dem Kapselmaterial bedüst wird (Wurster-Prozeß).

Das Kapselmaterial kann aus Synthese-Polymer oder vorzugsweise Zellulose-Derivaten bestehen. Als gut reproduzierbar hat sich die glatte, kugelförmige Kapsel erwiesen.

Als Lösungsvermittler eignet sich auch die Gruppe der komplexbildenden Lösungsvermittler vom Typ EDTA, die zur besseren Transparenz des erwarteten optischen Signals Metallsalzspuren in Lösung enthalten.

Die vorliegende Erfindung eines korrosionsgesteuerten Zeit-Indikators nutzt die quantitativ gut beherrschbaren Bildungsmechanismen von zusammenhängenden, kompakten, planparallenen Filmem aus Metallen, Metalloxiden-Sulfiden, wie sie von C. Wagner beschrieben worden sind. Diesen Untersuchungen zufolge gehorcht die Schichtbildung quantitativ den Zeitgesetzen zur Deckschichtbildung nach

$$d \, \Delta x/dt \; = \; konst.$$

bzw.

$$\Delta x \; = \; konst. \cdot t.$$

Dieses lineare Zeitgesetz gilt, wenn eine oder mehrere Phasengrenzreaktionen geschwindigkeitsbestimmend sind. In jenen Fällen, in denen Diffusionsvorgänge in der Deckschicht geschwindigkeitsbestimmend sind, folgen diese dem parabolischen, oder, bei besonders geringen Schichtdicken, dem logarithmischen Zeitgesetz $x = a + b. \log t$ von Tammann & Köster. Jedenfalls ist die Steigerung bei Stromdichte-Potential-Kurven proportional der Korrosionsgeschwindigkeit. Nach der vorliegenden Erfindung lassen sich für die Barriere in der Zusammensetzung und Schichtstärke exakt definierte, vorzugsweise metallische Schichten auf Epoxid-Papier, Polyester oder Polyimid-Folie nutzen die aus Mg, Al, Fe, Zn, Cu, Ni, Cr oder deren Legierungen, sowie Messing 67 bzw. 63, Konstantan, Neusilber oder dgl. bestehen. Zusammen mit beispielsweise aus der Leiterplattenfertigung bekannten Ätzhilfsmitteln aus $FeCl_3$, $CuCl_2$, $NH_4Cl$, $(NH_4)_2S_2O_8$, Glukonsäure etc. als Reaktionspartner bilden sie farbige Verbindungen oder lassen durch Ablösung der Deckschicht einen farbigen Hintergrund sichtbar werden. Dabei ergeben sich exakt zeitkontrollierte Reaktionen , wobei im einfachsten Fall eine vorher verdeckte, nach stattgefundener Korrosion jedoch optisch gut erkennbare ( z.B.rot-fluoreszierende) Signalfarbe sichtbar wird, oder mindestens zwei miteinander in charakteristischer Weise (Farbreaktion, Gasentwicklung) reagierende chemische Substanzen aufeinandertreffen.

Nachfolgend werden zwei Beispiele von Ausführungsformen der Erfindung angegeben:

Beispiel 1:

Eine ca. 6cm² große 35 µm-Reinst-Aluminiumfolie, rundum randförmig heiß eingesiegelt in vorzugsweise PET-Folienbeutel, wurde in der Mitte punktförmig mit 0,1 ml handelsüblicher Polyaluminiumchlorid-Lösung FG vor der Einsiegelung imprägniert. Zwei Tage nach dem Startzeitpunkt und gleichbleibender ZT (21°C) war die Aluminiumfolie an der imprägnierten Stelle durchgeätzt, so daß die (fluoreszierende) Signalfärbung der rückseitien PET-Folie des Einschlußbeutels frontseitig deutlich sichtbar wurde.

Beispiel 2:

Aluminiumfolie gemäß Beispiel 1 wurde mit stöchiometrisch überschüssiger Natriumhydroxid-Ätzlösung wie in Beispiel 1 imprägniert. Nach Ablauf von acht Tagen war die Aluminiumfolie in der Weise perforiert, daß ein vor der nunmehr perforierten Aluminiumfolie angebrachter Streifen Polreagenzpapier (Phenolphthalein-/NaCl-haltig) die typische rote Signalfärbung von Phenolphthalein-Na zeigte.

Abschließend ist darauf hinzuweisen, daß mit der vorliegenden Erfindung, ein einfaches, gut reproduzibles Gesamtkonzept zur Herstellung von Indikatoren zur Anzeige von Verfall, Reifegrad, Zeitabläufen und dergleichen geschaffen wurde, welches gute Verfügbarkeit, problemlose Lagerhaltung, einfache Startbarkeit mit Handabrollern, Umweltverträglichkeit (geschlossenes System), Schutz gegen unbefugte Manipulation, Herstellung auf handelsüblichen Maschinen und die Nutzung anderer Vorteile ermöglicht. Mit der vorliegenden Erfindung wurde erkannt, daß handelsüblich zur Verfügung stehende dünne Folien, wie sie bei Elektrolyt-Kondensatoren, gedruckten Schaltungen und dergl. benutzt werden und auch handelsübliche mikroverkapselte Donatorsubstanzen, wie sie beispielsweise im Pharmabereich benutzt werden, auch für die Herstellung solcher Indikatoren brauchbar sind. Hinsichtlich des Herstellungsganges kann man sich dabei in hier nicht näher zu beschreibender Weise auch bekannter Einfüllaggregate, auch für Zweikomponenten-Abfüllungen, wie sie aus der Süßwaren- und Dichtmassen-Konfektionierung (Polyurethanschaum-Einmalpackung) bekannt sind, bedienen.

## Patentansprüche

1. Indikator zur Anbringung an Gegenständen zur Anzeige von Zeitabläufen und/oder des Zeitpunkts des Eintritts von Zustandsänderungen, bei dem eine sichtbare Anzeige durch Farbänderung des Indikators o.dgl. durch Reaktion chemischer Substanzen und mit Zerstörung einer die chemischen Substanzen zunächst trennenden Barriere herbeigeführt wird,
   **dadurch gekennzeichnet,** daß die Barriere (B) eine durch gezielten Lochfraß mittels einer durch die Barriere zunächst eingeschlossenen chemischen Substanz durchdringbare Trenn- bzw. Deckschicht ist.

2. Indikator nach Anspruch 1,
   **gekennzeichnet,** durch eine durch den gezielten Lochfraß mit sichtbarer Veränderung des Indikators in Erscheinung tretende Fläche.

3. Indikator nach Anspruch 1,
   **dadurch gekennzeichnet,** daß die Barriere zwei mit sichtbarer Veränderung miteinander reagierbare chemische Substanzen voneinander trennt, von denen mindestens eine mit der Barriere zu deren Durchdringung chemisch reagiert.

4. Indikator nach Anspruch 1, 2 oder 3,
   **dadurch gekennzeichnet,** daß die Barriere in Wechselwirkung mit ätzenden bzw. lösenden Substanzen oder Gemischen daraus durch Elimination, Permeation und/oder Penetration durchdringbar ist.

5. Indikator nach Anspruch 1, 2, 3 oder 4
   **dadurch gekennzeichnet,** daß die die Barriere (B) durchdringende chemische Substanz ein Halogenid, Sulfat, Carbonat, Hydroxid eines Metalls der Gruppe IA, IIA, IIB oder VIII und/oder deren Mischungen ist.

6. Indikator nach Anspruch 1,
   **dadurch gekennzeichnet,** daß die die Barriere (B) durchdringende Substanz ein Protonendonator gegebenenfalls in Verbindung mit einem Oxidationsmittel ist.

7. Indikator nach Anspruch 6,
   **dadurch gekennzeichnet,** daß der Protonendonator eine Säure ist.

8. Indikator nach einem der Ansprüche 1 bis 7,
   **dadurch gekennzeichnet,** daß die durchdringbare Barriere (B) ein Diaphragma ist.

9. Indikator nach Anspruch 8,
**dadurch gekennzeichnet,** daß das Diaphragma als eine Folie ausgebildet ist.

10. Indikator nach den Ansprüchen 8 oder 9,
**dadurch gekennzeichnet,** daß die durchdringbare Barriere (B) eine Folie mit sich über die Erstreckung verändernder Dicke ist.

11. Indikator nach den Ansprüchen 8, 9 oder 10,,
**dadurch gekennzeichnet,** daß die durchdringbare Barriere eine Metallfolie ist.

12. Indikator nach Anspruch 11,
**dadurch gekennzeichnet,** daß die Barriere aus Mg, Al, Cu, Fe, Zn, Ni, Cr und/oder deren Legierungen besteht.

13. Indikator nach einem der Ansprüche 6 bis 10,
**dadurch gekennzeichnet,** daß die Barriere vorgeätzt ist.

14. Indikator nach einem der Ansprüche 8 bis 13,,
**dadurch gekennzeichnet,** daß die Barriere (B) von dendritischer Struktur ist.

15. Indikator nach einem der Ansprüche 1 bis 14,
**dadurch gekennzeichnet,** daß die die Barriere (B) durchdringende chemische Substanz frontseitig und die eine zustandsändernde chemische Reaktion eingehende chemische Substanz rückseitig auf der Barriere (B) aufgebracht sind.

16. Indikator nach einem der Ansprüche 1 bis 14,
**dadurch gekennzeichnet,** daß die miteinander reagierbaren chemischen Substanzen in einer wäßrigen Lösung auf die Barriere aufgebracht sind.

17. Indikator nach einem der voranstehenden Ansprüche,
**dadurch gekennzeichnet,** daß mindestens eine der chemisch miteinander reagierbaren Substanzen mikro- und/oder makroverkapselt in mindestens einer Schicht auf die Barriere aufgebracht ist.

18. Indikator nach Anspruch 17,
**dadurch gekennzeichnet,** daß die Barriere (B) auf mindestens einer Seite mit einer, mit einer der miteinander chemisch reagierenden Substanzen imprägnierten Papierschicht belegt ist.


**Claims**

1. Indicator for attaching to articles to indicate lapses of time and/or the time at which changes in state occur, in which a visible indication is brought about by colour change of the indicator or the like by reaction of chemical substances and with destruction of a barrier initially separating the chemical substances, characterised in that the barrier (B) is a separating or outer layer penetrable by selective pitting by means of a chemical substance initially enclosed by the barrier.

2. Indicator according to claim 1, characterised by a surface becoming evident with a visible change in the indicator as a result of the selective pitting.

3. Indicator according to claim 1, characterised in that the barrier separates two chemical substances capable of reacting with each other with a visible change, at least one of which reacts chemically with the barrier for the penetration thereof.

4. Indicator according to claim 1, 2 or 3, characterised in that the barrier, interacting with etching or dissolving substances or mixtures thereof, is penetrable by removal, permeation and/or penetration.

5. Indicator according to claim 1, 2, 3 or 4, characterised in that the chemical substance penetrating the barrier (B) is a halide, sulphate, carbonate, hydroxide of a metal of the group IA, IIA, IIB or VIII and/or mixtures thereof.

6. Indicator according to claim 1, characterised in that the substance penetrating the barrier (B) is a proton donor, optionally in conjunction with an oxidising agent.

7. Indicator according to claim 6, characterised in that the proton donor is an acid.

8. Indicator according to one of claims 1 to 7, characterised in that the penetrable barrier (B) is a diaphragm.

9. Indicator according to claim 8, characterised in that the diaphragm is constructed as a film.

10. Indicator according to claims 8 or 9, characterised in that the penetrable barrier (B) is a film with a thickness that varies over the extent.

11. Indicator according to claims 8, 9 or 10, characterised in that the penetrable barrier is a metal film.

12. Indicator according to claim 11, characterised in that the barrier is composed of Mg, Al, Cu, Fe, Zn, Ni, Cr and/or alloys thereof.

13. Indicator according to one of claims 6 to 10, characterised in that the barrier is pre-etched.

14. Indicator according to one of claims 8 to 13, characterised in that the barrier (B) is of a dendritic structure.

15. Indicator according to one of claims 1 to 14, characterised in that the chemical substance penetrating the barrier (B) is applied to the front and the chemical substance undergoing a state-changing chemical reaction is applied to the back of the barrier (B).

16. Indicator according to one of claims 1 to 14, characterised in that the chemical substances capable of reacting with one another are applied in an aqueous solution to the barrier.

17. Indicator according to one of the preceding claims, characterised in that at least one of the substances capable of reacting chemically with one another is applied in the micro- and/or macroencapsulated form in at least one layer to the barrier.

18. Indicator according to claim 17, characterised in that the barrier (B) is coated on at least one side with a paper layer impregnated with one of the substances reacting chemically with one another.

## Revendications

1. Indicateur destiné à être placé sur des produits pour afficher des temps écoulés et/ou l'instant auquel s'est produit une variation d'état, permettant un affichage fiable par variation de couleur de l'indicateur et/ou réaction de produits chimiques et destruction d'une barrière séparant tout d'abord les produits chimiques, indicateur caractérisé en ce que la barrière (B) est une couche de séparation ou de couverture susceptible d'être traversée par une perforation appropriée réalisée à l'aide d'une substance chimique emprisonnée tout d'abord par la barrière.

2. Indicateur selon la revendication 1, caractérisé par une surface qui apparaît par modification visible de l'indicateur résultant d'une perforation réalisée de manière dirigée.

3. Indicateur selon la revendication 1, caractérisé en ce que la barrière sépare deux substances chimiques réagissant l'une avec l'autre avec une modification visible, substances dont au moins une réagit chimiquement avec la barrière pour la perforer.

4. Indicateur selon les revendications 1, 2, 3, caractérisé en ce que la barrière peut être percée par action alternée de substances d'attaque ou de dissolution ou de mélange de ces substances, par élimination, perméation et/ou pénétration.

5. Indicateur selon les revendications 1, 2, 3, 4, caractérisé en ce que la substance chimique traversant la barrière (B) est un halogénure, un sulfate, un carbonate, un hydroxyde d'un métal du groupe IA, IIA, IIB ou VIII et/ou des mélanges de ces substances.

6. Indicateur selon la revendication 1, caractérisé en ce que la substance traversant la barrière (B) est un donneur de protons, le cas échéant en liaison avec un agent oxydant.

7. Indicateur selon la revendication 6, caractérisé en ce que le donneur de protons est un acide.

8. Indicateur selon l'une des revendications 1 à 7, caractérisé en ce que la barrière (B) susceptible d'être percée est un diaphragme.

9. Indicateur selon la revendication 8, caractérisé en ce que le diaphragme est une feuille.

10. Indicateur selon l'une des revendications 8 ou 9, caractérisé en ce que la barrière (B) susceptible d'être percée est une feuille d'épaisseur variable dans sa surface.

11. Indicateur selon les revendications 8, 9 10, caractérisé en ce que la barrière susceptible d'être percée est une feuille métallique.

12. Indicateur selon la revendication 11, caractérisé en ce que la barrière est en Mg, Al, Cu, Fe, Zn, Ni, Cr et/ou des alliages de ces métaux

13. Indicateur selon l'une des revendications 6 à 10, caractérisé en ce que la barrière est préalablement attaquée chimiquement.

14. Indicateur selon l'une des des revendications 8 à 13, caractérisé en ce que la barrière (B) a une structure dendritique.

15. Indicateur selon l'une des revendications 1 à 14, caractérisé en ce que la substance chimique qui traverse la barrière (B) est appliquée sur la face avant et la substance chimique entraînant une réaction modifiant l'état est appliquée sur la face arrière de la barrière (B).

16. Indicateur selon l'une des revendications 1 à 14, caractérisé en ce que les substances chimiques réagissant l'une avec l'autre sont appliquées sur la barrière sous la forme d'une solution aqueuse.

17. Indicateur selon l'une des revendications précédentes, caractérisée en ce qu'au moins l'une des substances réagissant chimiquement entre elles est micro et/ou macro encapsulée dans au moins une couche appliquée sur la barrière.

18. Indicateur selon la revendication 17, caractérisé en ce que la barrière (B) est revêtue au moins d'une couche de papier, imprégnée de l'une des substances réagissant chimiquement entre elles.

Fig. 1

Fig. 2